# EUROPEAN PATENT APPLICATION

(11) **EP 0 818 507 A1**
(43) Date of publication of application: **14.01.1998**
(21) Application number: 97304907.5
(22) Date of filing: 04.07.1997
(51) Int. Cl.: C08L 71/12

(54) **High flow poly (phenylene ether) resin compositions**

(30) Priority: 11.07.1996 US 682811
(71) Applicant: GENERAL ELECTRIC COMPANY, Schenectady, NY 12345 (US)
(72) Inventor: Morokuma, Hiroshi, Moka City, Tochigi Prefecture 321-43 (JP)
(74) Representative: Szary, Anne Catherine, Dr.

(57) **Abstract**

The present invention is related to poly(phenylene ether) resin compositions comprising at least one hydrocarbon resin that is substantially free of unsaturation. The compositions unexpectedly show increased flow and solvent resistance over control compositions not containing the hydrocarbon resin.

## Description

This invention relates to poly(phenylene ether) resin compositions which exhibit enhanced properties, such as improved flow.

### Brief Description of the Related Art

Polyphenylene ether resins (hereinafter referred to as "PPE") are generally characterized as amorphous resins having relatively high glass transition temperatures (Tg's), good ductility, and high strength. A natural consequence of the high Tg's of PPE is their excellent dimensional stability over a temperature range extending up to about the Tg's of the resins. Unfortunately, PPE are limited in their melt flow and in their chemical resistance, especially to aromatic hydrocarbon solvents.

Numerous methods have been employed to improve the properties of PPE. For example, PPE has been blended with polystyrene, high impact polystyrene, and polystyrene block copolymers to afford compositions which have improved melt flow characteristics as described in US Patent Nos. 3,383,435; 3,960,808; 4,054,553; 4,128,603; 4,152,316; 4,309,514; 4,313,864; 4,322,507; and 4,544,703. Such compositions afford improved flow but at the expense of reduced heat distortion temperature due to the reduced glass transition temperature of the PPE in the compositions from the styrenic-based resin.

PPE has also been blended with various crystalline resins to afford enhanced physical properties, such as increased chemical resistance and enhanced flow. Examples of some of these blends can be found in US Patent Nos. 4,600,741; 4,873,286; 4,902,753; 5,153,267; 5,166,264; 5,231,132; 5,231,146; 5,212,255; 5,290,881; 5,399,610; and 5,489,640. PPE are generally not compatible with the crystalline resins and various methods have developed to enhance the compatibility in order to achieve commercially useful properties as illustrated in the aforementioned patents.

Compositions containing a mixture of PPE molecular weights have also been employed to achieve a better balance of improved flow and other properties such as ductility as found in US Patent Nos. 4,154,7l2; 4,252,913; 4,588,806; 5,081,185; and 5,089,562. Various additives have also been utilized to improve the melt flow yet still substantially retain the basic physical properties of the unmodified compositions. Illustrative compositions teaching some of the additives can be found in US Patent Nos. 4,579,901; 4,684,681; 4,681,906; 4,822,836; 4,826,919; and 5,106,899.

Even with all the various approaches to achieve enhanced physical properties, new application designs requiring long flow lengths and thin-wall designs continue to drive technology developments for an even better overall balance of physical properties. It is therefore apparent that a need exists for PPE resin compositions that have improved flow yet retain the other attractive physical properties.

### SUMMARY OF THE INVENTION

The continuing long felt needs discussed above have been generally satisfied by the discovery of an improved thermoplastic composition which comprises:
(a) at least one poly(phenylene ether) resin; and
(b) at least one hydrocarbon resin of the formulas 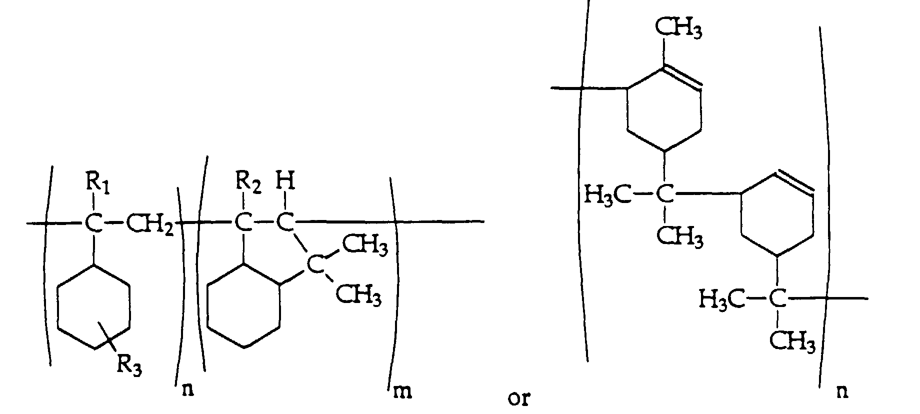 wherein each R₁, R₂, and R₃ is independently hydrogen, a C₁₋₆ alkyl radical, or mixtures of hydrogen and C₁₋₆ alkyl radicals and n is from about 3 to about 20 and m is from 0 to about 20.

The composition may further comprise at least of the following optional components: polystyrene resin, high impact polystyrene resin, crystalline resins such as, for example, polyolefins, polyamides, polyesters, and polyarylene sulfides, compatibilizers, impact modifiers, anti-oxidants, flame retardants, drip retardants, crystallization nucleators, dyes, pigments, colorants, reinforcing agents, fillers, stabilizers, and antistatic agents.

The description which follows provides further details regarding this invention.

### DETAILED DESCRIPTION OF THE INVENTION

PPE, per se, are known polymers comprising a plurality of structural units of the formula (I): 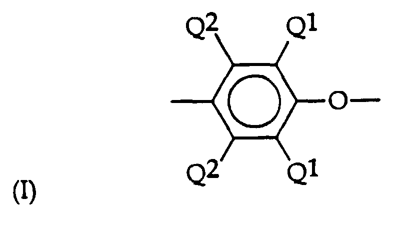 wherein for each structural unit, each Q¹ is independently halogen, primary or secondary lower alkyl (e.g., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q₂ is independently hydrogen, halogen, primary or secondary lower alkyl, phenyl, haloalkyl, hydrocarbonoxy or halohydrocarbonoxy as defined for Q¹ Preferably, each Q¹ is alkyl or phenyl, especially C₁₋₄ alkyl, and each Q² is hydrogen.

Both homopolymer and copolymer PPE are included. The preferred homopolymers are those containing 2,6-dimethyl-1,4-phenylene ether units. Suitable copolymers include random copolymers containing, for example, such units in combination with 2,3,6-trimethyl-1,4-phenylene ether units. Also included are PPE containing moieties prepared by grafting vinyl monomers or polymers such as polystyrenes, as well as coupled PPE in which coupling agents such as low molecular weight polycarbonates, quinones, heterocycles and formals undergo reaction in known manner with the hydroxy groups of two PPE chains to produce a higher molecular weight polymer.

It will be apparent to those skilled in the art from the foregoing that the PPE contemplated for use in the present invention include all those presently known, irrespective of variations in structural units or ancillary chemical features..

The PPE generally have an intrinsic viscosity often between about 0.10-0.60 dl./ g., preferably in the range of about 0.15-0.48 dl./g., all as measured in chloroform at 25°C. For a preferred embodiment of the present invention, a high intrinsic viscosity PPE and a low intrinsic viscosity PPE are utilized in combination. Generally the high intrinsic viscosity PPE has an intrinsic viscosity between about 0.38 and about 0.48 dl/g. and the low intrinsic viscosity PPE has an intrinsic viscosity between about 0.15 and about 0.33 dl/ gm. Although the weight ratio of the PPE's can vary widely when two are used, a preferred ratio of high intrinsic viscosity PPE to low intrinsic viscosity PPE is about 5:1 to about 1:5. Determining an exact ratio, when two intrinsic viscosities are used, will depend somewhat on the exact intrinsic viscosities of the PPE used and the ultimate physical properties that are desired.

Component B of the present invention comprises at least one hydrocarbon resin of the formula (II) or (III): 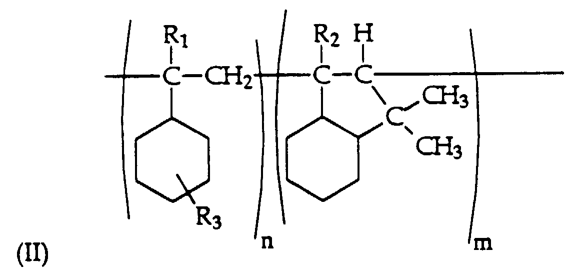 or 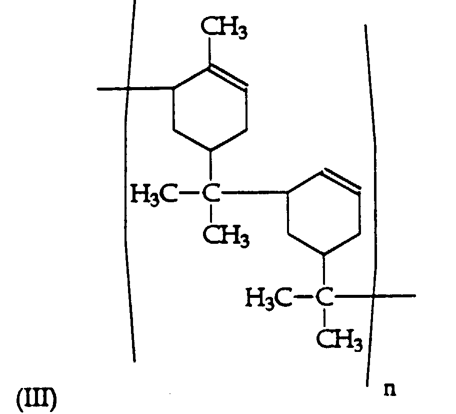 wherein each R₁, R₂, and R₃ is independently hydrogen, a C₁₋₆ alkyl radical, or mixtures of hydrogen and C₁₋₆ alkyl radicals and n is from about 3 to about 20 and m is from 0 to about 20. Numerous grades of these resins are commercially available but for the present invention, it is desired that the hydrocarbon resins be substantially free of unsaturation. By substantially free of unsaturation is meant that any unsaturation in the resin be hydrogenated, preferably to a level of at least about 80% hydrogenation or more of any double bonds.

Preferred resins corresponding to formula (II) include those wherein:
(i) R₁ and R₃ are each a C₁ radial, n is from about 3 to about 20, and m is zero;
(ii) R₁ is a mixture of hydrogen and a C₁ alkyl radials, R₃ is a mixture of hydrogen and a C₁ alkyl radials, n is from about 3 to about 20, and m is zero; and
(iii) R₁ is a mixture of hydrogen and a C₁ alkyl radial, R₂ is a C₁ alkyl - radical, R₃ is a C₁ alkyl radical, n is from about 3 to about 20, and m is from about 3 to about 20.

Especially preferred hydrocarbon resins have a number average molecular weight of between about 200 and about 1200 and include the resins of formulas (IV), (V), and (VI): 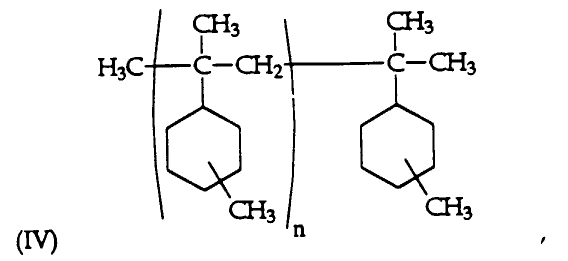 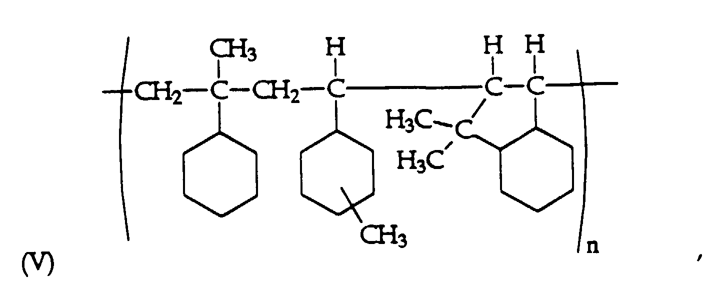 and

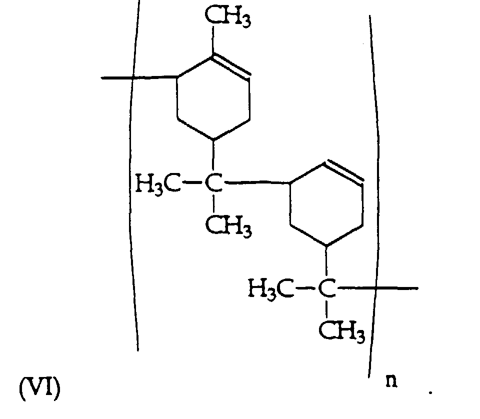

The amount of the hydrocarbon resin employed in the present invention is that which is sufficient to improve the melt viscosity by at least about 15% as measured according to ASTM/ISO 1133 at 300°C with a 21.6 kg load using a 4 minute hold time and a 2.1 mm diameter by 8 mm length orifice. The weight of the hydrocarbon resin employed is generally between about 0.1 to about 30 weight percent based on the weight of the entire composition and is preferably between about 0.5 to about 20 weight percent based on the weight of the entire composition. Determination of an exact amount can be readily determined based upon the desired ultimate physical properties of the final composition.

The compositions of the present invention may also contain at least one nonelastomeric polymer of an alkenylaromatic compound. Suitable polymers of this type may be prepared by methods known in the art including bulk, suspension and emulsion polymerization. They generally contain at least about 25% by weight of structural units derived from an alkenylaromatic monomer of the formula (VII): 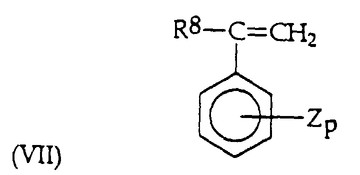 wherein R⁸ is hydrogen, lower alkyl or halogen; Z is vinyl, halogen or lower alkyl; and p is from 0 to 5. These resins include homopolymers of styrene, chlorostyrene and vinyltoluene, random copolymers of styrene with one or more monomers illustrated by acrylonitrile, butadiene, α-methylstyrene, ethylvinylbenzene, divinylbenzene and maleic anhydride, and rubber-modified polystyrenes comprising blends and grafts, wherein the rubber is a polybutadiene or a rubbery copolymer of about 98-68% styrene and about 2-32% diene monomer. These rubber modified polystyrenes include high impact polystyrene (commonly referred to as HIPS). Non-elastomeric block copolymer compositions of styrene and butadiene can also be used that have linear block, radial block or tapered block copolymer architectures. They are commercially available from such companies as Fina Oil as under the trademark FINACLEAR and Phillips under the trademark K-RESINS.

The amount of the polymer of a nonelastomeric alkenylaromatic compound, when one is used, is an amount effective to improve the flow of the composition. Improved flow can be indicated by reduced viscosity or reduced injection pressures needed to fill a part during an injection molding process. Generally, the nonelastomeric alkenylaromatic compound is utilized in the range of about 1% to about 95% by weight based on the total weight of the composition. The preferred range is about 20% to about 70% by weight and the most preferred range is about 35% to about 60% by weight; based on the total weight of the composition.

The compositions of the present invention may also contain at least one impact modifier. The impact modifier may be used alone or in combination with a nonelastomeric alkenylaromatic compound. The impact modifiers include block (typically diblock, triblock or radial teleblock) copolymers of alkenyl aromatic compounds and dienes. Most often at least one block is derived from styrene and at least one block from at least one of butadiene and isoprene. Especially preferred are the triblock and diblock copolymers comprising polystyrene blocks and diene derived blocks wherein the aliphatic unsaturation has been preferentially removed with hydrogenation. Mixtures of various copolymers are also sometimes useful. The weight average molecular weights of the impact modifiers are typically in the range of about 50,000 to 300,000. Block copolymers of this type are available commercially from a number of sources, including Phillips Petroleum under the trademark SOLPRENE, Shell Chemical Co. under the trademark KRATON, and Kuraray under the trademark SEPTON.

Another preferred impact modifier is polyoctenylene as described in US Patent No. 4,656,220. Polyoctenylene resins are per se known and are generally prepared by a polymerization reaction of cyclooctene, in which a ring opening and a ring expansion may occur. Although polyoctenylene resins are not elastomeric or rubbery in the narrow sense of the words, these resins do increase the ductility of PPE compositions and are included as impact modifiers in the present compositions.

Various mixtures of the aforementioned impact modifiers are also sometimes useful. The amount of the impact modifier generally present, when one is used, is an amount effective to improve the physical properties, for example, the ductility of the composition when compared to the same composition without an impact modifier. Improved ductility can be indicated by increased impact strength, increased tensile elongation to break, or both increased impact strength and increased tensile elongation to break. Generally, the impact modifier is utilized in the range of about 1% to about 20% by weight based on the total weight of the composition. The preferred range is about 3% to about 15% by weight; based on the total weight of the composition and the most preferred range is between about 5% to about 12% by weight; based on the total weight of the composition. The exact amount and types or combinations of impact modifiers utilized will depend in part on the requirements needed in the final blend composition.

Compositions of the present invention can also include effective amounts of at least one additive selected from the group consisting of crystalline resins such as, for example, polyolefins, polyamides, polyesters, and polyarylene sulfides, compatibilizers, anti-oxidants, flame retardants, drip retardants, crystallization nucleators, dyes, pigments, colorants, reinforcing agents, fillers, stabilizers, and antistatic agents. These additives are known in the art, as are their effective levels and methods of incorporation. Effective amounts of the additives vary widely, but they are usually present in an amount up to about 60% or more by weight, based on the weight of the entire composition.

PPE blends of the present invention can be prepared by a variety of methods involving intimate admixing of the materials with any additional additives desired in the formulation. Suitable procedures include solution blending and melt blending. Because of the availability of melt blending equipment in commercial polymer processing facilities, melt processing procedures are generally preferred. Examples of equipment used in such melt compounding methods include: co-rotating and counter-rotating extruders, single screw extruders, disc-pack processors and various other types of extrusion equipment. In some instances, the compounded material exits the extruder through small exit holes in a die and the resulting strands of molten resin are cooled by passing the strands through a water bath. The cooled strands can be chopped into small pellets for packaging and further handling.

All of the ingredients may be added initially to the processing system, or else certain additives may be pre-compounded with each other. It is also sometimes advantageous to employ at least one vent port in each section between the feed ports to allow venting (either atmospheric or vacuum) of the melt. Those of ordinary skill in the art will be able to adjust blending times and temperatures, as well as component addition location and sequence, without undue additional experimentation.

It should also be clear that improved molded articles prepared from the compositions of the present invention represent an additional embodiment of this invention.

All patents cited by reference are incorporated by reference herein.

The following examples are provided to illustrate some embodiments of the present invention. They are not intended to limit the invention in any aspect. All percentages are by weight based on the total weight of the entire composition, unless otherwise indicated.

### EXAMPLES

The following examples are illustrative of the compositions of the present invention.

The compositions of Tables 1 and 2 were extruded on a Werner-Pfleiderer twin-screw extruder at a temperature of about 280-320°C with a vacuum of about 1-5 inches Hg applied to the melt during compounding. The resultant compositions were molded using a van Dorn injection molding machine using a temperature set of about 275-300°C and a mold temperature of about 80-110°C. Samples of the compositions were also subjected to measurement of notched Izod impact strength according to ASTM D256 (employing a sample size of 2.5 inch by 0.5 inch by 0.125 inch), Dynatup (energy to fracture, falling dart test) strength according to ASTM D3763 (using 4 inch diameter by 0.125 inch disks), flexural modulus and flexural strength according to ASTM D790 (employing a sample size of 6 inch by 0.5 inch by 0.25 inch), melt viscosity measured according to ASTM/ISO 1133 at 300°C with a 21.6 kg load using a 4 minute hold time and a 2.1 mm diameter by 8 mm orifice; and tensile yield and tensile elongation at break according to ASTM D638. Chemical resistance testing was done by apply a continuous 1.25% distortion to a 2.5 inch by 0.5 inch by 0.125 inch test specimen which had been annealed for 3 hours at 180°C followed by subjecting the strained test specimens to a light oil common to the automotive industry used to prevent screws from rusting. Visual observation was used to determine the time in minutes for the test specimens to show cracks.

The materials used in the following examples were as follows:

PPE-0.30 is poly(2,6-dimethylphenylene ether) resin having an intrinsic viscosity of about 0.30 dl/gm measured in chloroform at 25°C, obtained from GE Plastics.

PPE-0.40 is poly(2,6-dimethylphenylene ether) resin having an intrinsic viscosity of about 0.40 dl/gm measured in chloroform at 25°C, obtained from GE Plastics.

PPE-0.46 is poly(2,6-dimethylphenylene ether) resin having an intrinsic viscosity of about 0.46 dl/ gm measured in chloroform at 25°C, obtained from GE Plastics.

KL8006 is a polystyrene-poly(ethylenebutylene)-polystyrene block copolymer obtained from Kuraray under the trademark SEPTON.

G1650 is a polystyrene-poly(ethylenebutylene)-polystyrene block copolymer obtained from Shell Chemical Co. under the trademark KRATON.

PS is polystyrene resin obtained from Huntsman Chemical Co. as grade 203.

Vest. is a polyoctenylene resin obtained from Chemische Werke Huls Aktiengesellschaft under the trademark VESTENAMER resin as grade 8012.

Flow-1 is a hydrocarbon resin of the formula: 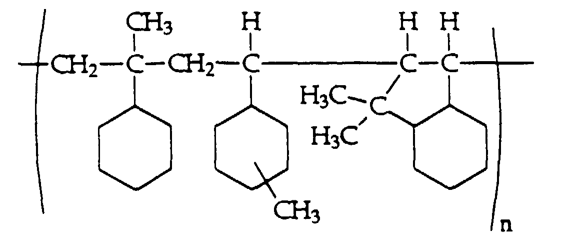 obtained from Arakawa Chemical Co., under the tradename ARKRON as grade P-140.

Flow-2 is a hydrocarbon resin of the formula: 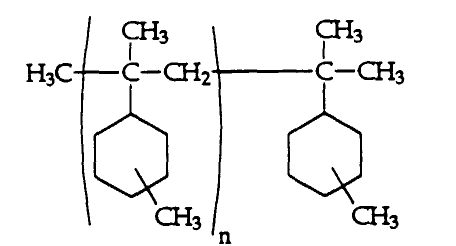 obtained from Yasuhara Chemical Co., LTD., under the tradename CLEARON as grade P-125.

Flow-3 is an indene-cumaron based hydrocarbon resin of the formula: 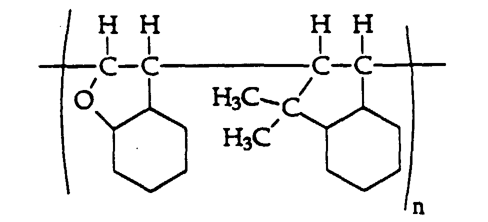 obtained from Nihon Sekiyu Co., Ltd., under the tradename UNIRESIN as grade 760.

Flow-4 is a hydrocarbon resin of the formula: 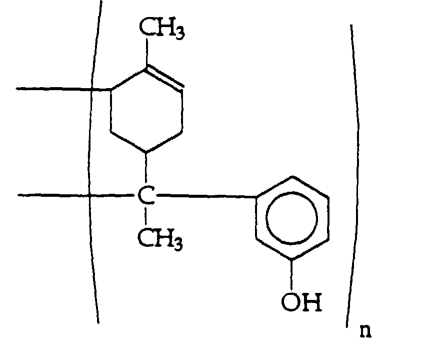 obtained from Arizona Chemical Co., under the tradename NIREZ as grade 2150.

Flow-5 is a hydrocarbon resin of the formula: 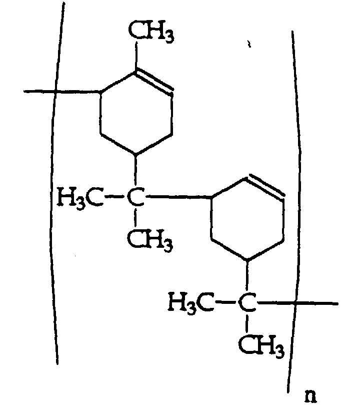 obtained from Arizona Chemical Co., under the tradename ZONAREZ as grade M-1115.

**Table 1.**

| Sample: | 1 | 2 | 3 | 4 | 5 | 6 |
|---|---|---|---|---|---|---|
| PPE-0.30 | 70 | 70 | 70 | 70 | 70 | 70 |
| PPE-0.40 | 30 | 30 | 30 | 30 | 30 | 30 |
| KL8006 | 4 | 4 | 4 | 4 | 4 | 4 |
| Flow-1 | 0 | 4 | 0 | 0 | 0 | 0 |
| Flow-2 | 0 | 0 | 4 | 0 | 0 | 0 |
| Flow-3 | 0 | 0 | 0 | 4 | 0 | 0 |
| Flow-4 | 0 | 0 | 0 | 0 | 4 | 0 |
| Flow-5 | 0 | 0 | 0 | 0 | 0 | 4 |

| Properties: | | | | | | |
|---|---|---|---|---|---|---|
| notched Izod; ft-lb/in | 2.7 | 1.5 | 1.4 | 2.9 | 1.8 | 1.8 |
| Dynatup; ft-lbs | 27.4 | 35 | 32 | 23 | 29 | 33 |
| Flexural modulus, kpsi | 363 | 359 | 357 | 376 | 368 | 364 |
| Flexural strength, psi | 16450 | 17030 | 16900 | 17960 | 17430 | 17290 |
| Tensile strength, psi | 7945 | 10540 | 10420 | 8181 | 8043 | 8459 |
| Tensile elongation, % | 10 | 12 | 12.1 | 20.2 | 21.8 | 12.1 |
| MVR, g/10 min. | 63 | 88 | 92 | 99 | 95 | 92 |
| Chemical resistance, min. | 98 | 178 | 171 | 73 | 61 | 161 |

As noted by the illustrative data in Table 1, the melt flow, as indicated by the MVR data, was improved with each of the hydrocarbon resin additives as noted in samples 2 to 6. However, samples 4 and 5 have worse chemical resistance than the control sample 1. Samples 2, 3, and 6 unexpectedly have improved chemical resistance from both the perspective of the control, sample 1 not containing a hydrocarbon resin additive and as compared to the other hydrocarbon resin additives (samples 4 and 5).

**Table 2.**

| Sample: | 7 | 8 | 9 | 10 | 11 | 12 | 13 |
|---|---|---|---|---|---|---|---|
| PPE-0.30 | 100 | 0 | 0 | 0 | 0 | 0 | 0 |
| PPE-0.40 | 0 | 100 | 0 | 90 | 100 | 100 | 100 |
| PPE-0.46 | 0 | 0 | 100 | 0 | 0 | 0 | 0 |
| Flow-2 | 0 | 0 | 0 | 0 | 3 | 5 | 7 |
| PS | 0 | 0 | 0 | 10 | 0 | 0 | 0 |
| G-1650 | 1.5 | 1.5 | 1.5 | 1.5 | 1.5 | 1.5 | 1.5 |
| Vest. | 2.5 | 2.5 | 2.5 | 2.5 | 2.5 | 2.5 | 2.5 |

| Properties: | | | | | | | |
|---|---|---|---|---|---|---|---|
| notched Izod; ft-lb/in | 2.4 | 3.4 | 2.4 | 3.5 | 3.4 | 3.7 | 3.8 |
| Dynatup; ft-lbs | 30.0 | 37.1 | 39.2 | 28.3 | 36.5 | 35.4 | 37.7 |
| Flexural modulus, kpsi | 347 | 329 | 330 | 346 | 330 | 333 | 327 |
| Flexural strength, psi | 14350 | 14370 | 14320 | 15010 | 14390 | 14380 | 14190 |
| Tensile strength, psi | 10340 | 10190 | 10210 | 10870 | 10240 | 10240 | 10150 |
| Tensile elongation, % | 34 | 38 | 85 | 33 | 86 | 124 | 47 |
| MVR, g/10 min. | 48 | 16 | 6 | 22 | 19 | 26 | 31 |
| Chemical resistance, min. | 71 | 320 | 495 | 250 | 550 | 570 | 640 |

Samples 7 to 10 in Table 2 are various controls illustrating the effects of changing the molecular weight of the PPE and the addition of polystyrene on the physical properties of the PPE blends. Samples 11 to 13 are illustrative of the present invention and would correspond to sample 8 but with the addition of the saturated hydrocarbon resin. It is important to note that these composition are very high in PPE content and demonstrate very useful and unexpected improvements in chemical resistance and melt viscosity.

## Claims

1. A resin composition comprising:
(a) at least one poly(phenylene ether) resin; and
(b) at least one hydrocarbon resin of the formulas 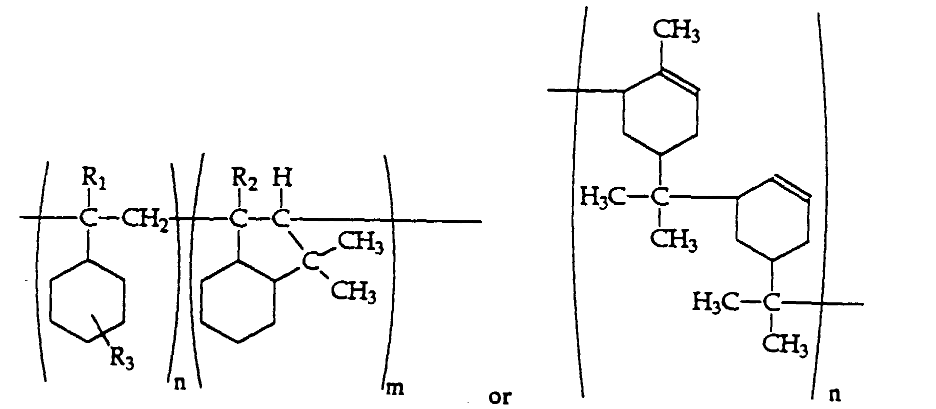 wherein each R₁, R_{2,} and R₃ is independently hydrogen, a C₁₋₆ alkyl radical, or mixtures of hydrogen and C₁₋₆ alkyl radicals and n is from about 3 to about 20 and m is from 0 to about 20.

2. The composition of Claim 1, wherein R₁ and R₃ are each a C₁ radical, n is from about 3 to about 20, and m is zero.

3. The composition of Claim 1, wherein R₁ is a mixture of hydrogen and C₁ alkyl radicals, R₃ is a C₁ alkyl radical, n is from about 3 to about 20, and m is zero.

4. The composition of Claim 1, wherein R₁ is a mixture of hydrogen and C₁ alkyl radicals, R₂ is a C₁ alkyl radical, R₃ is a C₁ alkyl radical, n is from about 3 to about 20, and m is from about 3 to about 20.

5. The composition of Claim 1, further comprising at least one member of the group consisting of polystyrene resin, high impact polystyrene resin, and impact modifiers.

6. The composition of Claim 1, further comprising at least one member of the group consisting of crystalline resins, compatibilizers, antioxidants, flame retardants, drip retardants, crystallization nucleators, dyes, pigments, colorants, reinforcing agents, fillers, stabilizers, antistatic agents, and impact modifiers.

7. A resin composition comprising:
(a) at least one poly(phenylene ether) resin; and
(b) at least one hydrocarbon resin of the formulas: 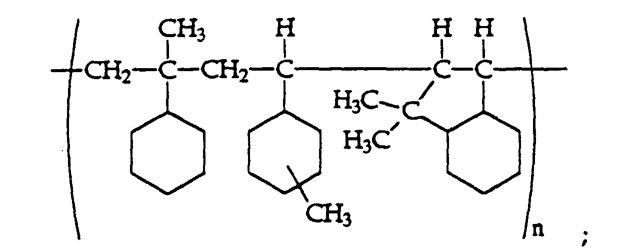 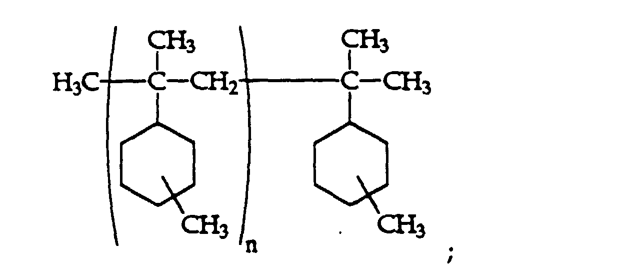 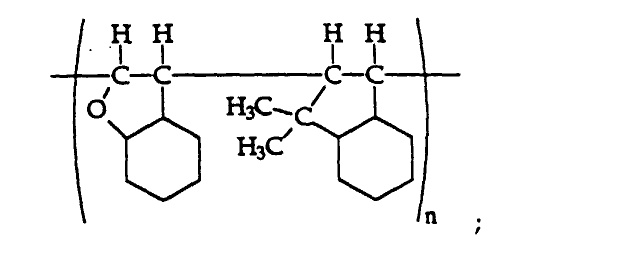 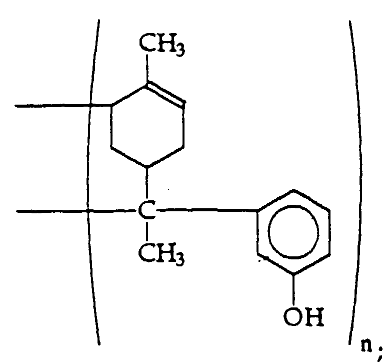 and 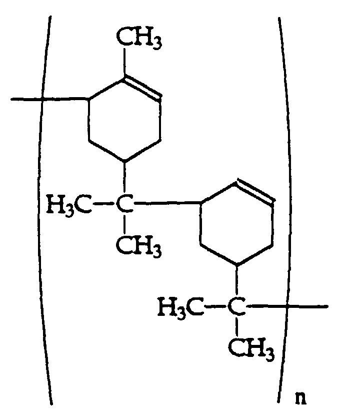 wherein each n is from about 3 to about 20.

8. A resin composition consisting essentially of:
(a) at least one poly(phenylene ether) resin; and
(b) at least one resin of the formulas 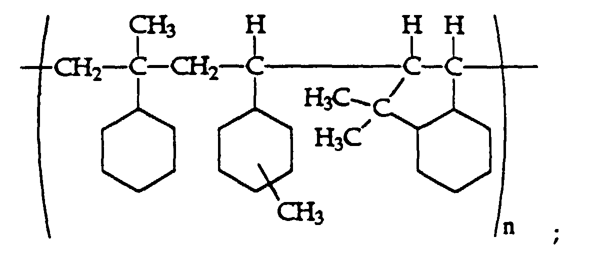 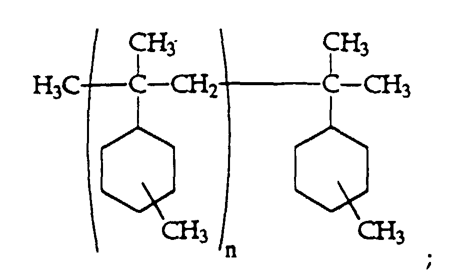 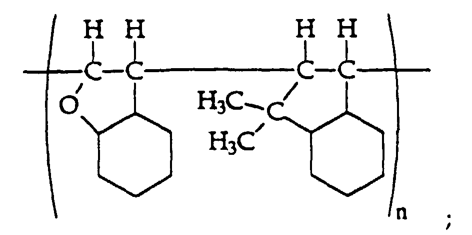 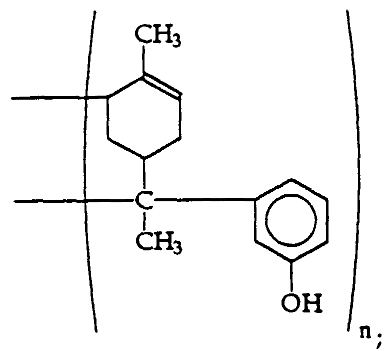 and 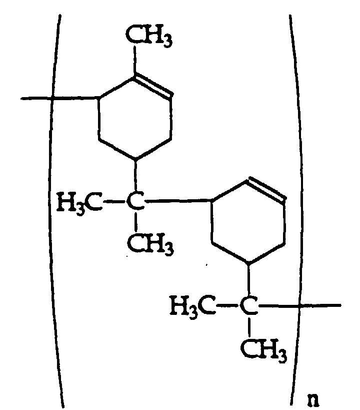 wherein each n is from about 3 to about 20.

9. The composition of Claim 8, further consisting essentially of at least one member of the group consisting of crystalline resins, compatibilizers, anti-oxidants, flame retardants, drip retardants, crystallization nucleators, dyes, pigments, colorants, reinforcing agents, fillers, stabilizers, antistatic agents, and impact modifiers.
